# EUROPEAN PATENT APPLICATION

(11) **EP 0 992 548 A2**
(43) Date of publication of application: **12.04.2000**
(21) Application number: 99119907.6
(22) Date of filing: 08.10.1999
(51) Int. Cl.: C09D 5/08

(54) **Anticorrosive primer composition**

(30) Priority: 09.10.1998 JP 28836598; 24.08.1999 JP 23748799
(71) Applicant: Toyo Boseki Kabushiki Kaisha, Osaka-shi, Osaka-fu (JP)
(72) Inventor: Uno, Keiichi, Ohtsu-shi, Shiga-ken (JP); Yutani, Yuji, Ohtsu-shi, Shiga-ken (JP); Tachimori, Hiroshi, Ohtsu-shi, Shiga-ken (JP); Kamo, Hiroaki, Ohtsu-shi, Shiga-ken (JP); Hotta, Yasunari, Ohtsu-shi, Shiga-ken (JP); Togawa, Keiichiro, Ohtsu-shi, Shiga-ken (JP)
(74) Representative: VOSSIUS & PARTNER

(57) **Abstract**

An anticorrosive primer composition containing an electrically conductive polymer and an inorganic oxide can meet all the requirements for conventional primers, while exhibiting excellent anticorrosive performance without any heavy metal considered to cause environmental pollution. In particular, the use of composite structural particles of an electrically conductive polymer and an inorganic oxide can improve the water resistance of a primer coat because the resulting anticorrosive primer composition gives a stable dispersion in any of the aqueous, organic solvent, and mixed solvent systems without any dopant or surfactant in quantity.

## Description

The present invention belongs to the field of coating techniques on metals. More particularly, it relates to an anticorrosive primer composition exhibiting excellent anticorrosive performance without any heavy metal and to coated metal articles obtained using the same.

In general, metal articles are subjected to various surface treatments for giving anticorrosion, design or other features, and then covered by resin coating. With a single coat of paint for the resin coating it is, however, difficult to meet various requirements, such as anticorrosion, adhesion to metals, design, stain resistance, weathering resistance, and coat hardness. Therefore, in usual cases, at least three paints having the functions of a primer coat, an intercoat, and a topcoat, respectively, are applied one on top of another.

The primer coat is required to have anticorrosion, adhesion both to surface-treated or untreated metals and to intercoats or topcoats, flexibility, water resistance, and other properties. For ordinary anticorrosive agents, various compounds containing heavy metals are considered to cause environmental pollution, such as chromium, lead, and zinc, have been used in large quantities as anticorrosive pigments.

In contrast, for anticorrosive agents of a different type, containing no heavy metals, electrically conductive polymers have recently been found to have anticorrosive effects and therefore attracted considerable attention (see D.A. Wrobleski *et al*., Los Alamos National Laboratory Report LA-UR-92-360(1991); and D.A. Wrobleski *et al*., Polymer Prepr., Am. Chem. Soc. Div. Polymer Chem., 35(1), 265(1994)).

However, the single use of an electrically conductive polymer cannot meet all of the above properties as a primer coat.

Under these circumstances, the problem to be solved is how to meet not only all of the required properties of a primer coat by making use of an electrically conductive polymer as an anticorrosive agent but also the social demands that anticorrosive primer compositions containing no heavy metals considered to cause environmental pollution, such as chromium, lead, or zinc, should be put to practical use.

To solve the problem, there has been disclosed a water-soluble and/or water-dispersible composition for surface treatment, which provides a metal plate with a coating layer having excellent anticorrosion and adhesion to the same level as attained by the conventional chromate treatment but containing no chromium (see JP-A 10-251509/1998). This composition is composed mainly of a resin, a polyaniline and/or a derivative thereof, and an inorganic oxide, wherein the amount of polyaniline and/or the derivative thereof is in the range of 0.1% to less than 20% and the amount of inorganic oxide is in the range of 1% to less than 40%, both based on the weight of the resin.

This composition for surface treatment, however, has poor resistance to water, particularly to boiling water, because polyanilines are substantially insoluble in water or other solvents and therefore when the polyanilines are to be dispersed in an aqueous system the aqueous dispersion requires an assistant by the use of a dopant giving high hydrophilicity to the polyanilines or by the addition of a surfactant in quantity, thereby deteriorating the water resistance of a primer coat.

To avoid the use of such a dopant, there has been disclosed a method for preventing corrosion on metals, which comprises the steps of coating the metal surface by the immersion in, or application of, a solution containing a soluble polyaniline compound without any dopant and optionally containing a general-purpose polymer compound in a solvent, and then drying to form an anticorrosive primer coat on the metal surface.

The coating solution used in this method, however, merely makes a small contribution to the improvement of anticorrosion, water resistance, and adhesion to metals of a primer coat.

It is the object of the present invention to provide an anticorrosive primer composition exhibiting excellent anticorrosive performance without any heavy metal considered to cause environmental pollution. This object could be achieved by the finding that a combination of an electrically conductive polymer and an inorganic oxide gives an anticorrosive primer composition having various functions required for conventional primers, such as adhesion, water resistance, flexibility, and chemical resistance, while exhibiting excellent anticorrosive performance without any heavy metal,

Thus, the present invention provides an anticorrosive primer composition containing an electrically conductive polymer and an inorganic oxide.

In a preferred embodiment the anticorrosive primer composition may contain the electrically conductive polymer and the inorganic oxide in the form of composite structural particles.

In a preferred embodiment the anticorrosive primer composition may further contain at least one compound selected from the group consisting of phosphoric acids, sulfonic acids, and derivatives thereof.

In a preferred embodiment the anticorrosive primer composition may further contain an electrically non-conductive thermoplastic polymer, preferably having ionic substituent groups.

In a preferred embodiment the anticorrosive primer composition may have hardening reactivity, for example, by the introduction of cross-linkable substituent groups into the electrically conductive polymer and/or into the electrically non-conductive thermoplastic polymer, or by the addition of a hardening agent.

The present invention further provides an anticorrosive primer coat formed by the application of the above anticorrosive primer composition and a coated metal article having a metal layer, a primer coat formed on the metal layer by the application of the above anticorrosive primer composition, and a topcoat.

The electrically conductive polymer used in the present invention may include organic polymers having π-conjugated double bonds, examples of which are polymers obtained from acetylene, aniline, pyrrole, thiophene, benzene, and/or substituted derivatives thereof; and copolymers obtained from two or more kinds of these monomers. Preferred electrically conductive polymers are polymers and mixtures thereof, which are obtained from aniline, pyrrole, thiophene, and/or substituted derivatives thereof.

The substituent derivatives of these monomers may have C₁-C₃₀ alkyl, alkoxyl, alkylene oxide, sulfonic acid, or alkylene sulfonic acid groups.

The electrically conductive polymer is usually used in a state doped with an inorganic or organic acid; however, it may be undoped.

The inorganic oxide used in the present invention may include fine particles of magnesium oxide, calcium oxide, aluminum oxide, silicon oxide, lithium oxide, titanium oxide, germanium oxide, manganese oxide, and vanadium oxide; and colloidal dispersions of silica, alumina, or lithium silicate. Preferably used are titanium oxide and a colloidal dispersion of silica.

The fine particles of an inorganic oxide may preferably have a mean diameter of 5 nm to 10 µm. The fine particles of smaller than 5 nm in mean diameter, although they are suitable from a functional point of view, are not preferred because of difficulty in producing or handling them. In contrast, the fine particles of larger than 10 µm in mean diameter are not preferred because they give an unstable dispersion.

The fine particles of an inorganic oxide are commercially available or can be produced by any of the conventional methods, including dry or wet pulverization, wet growth methods (*e.g*., sol-gel methods), and vapor phase deposition.

The electrically conductive polymer and the inorganic oxide may be in the form of composite structural particles, in which the fine particles of the inorganic oxide are coated with the electrically conductive polymer. In this case, the weight of the composite structural particles may be divided by calculation into the weight of the electrically conductive polymer and the weight of the inorganic oxide, and these calculated weights may be regarded as the amounts of ingredients contained separately in the composition. In addition to the composite structural particles, electrically conductive polymers and/or inorganic oxides, which are not in the form of composite structural particles, may be added to the composition, as a matter of course.

When the composite structural particles of an electrically conductive polymer and an inorganic oxide are used, there is no need to select a dopant or a surfactant to fit in with a solvent used, in contrast to the case where an electrically conductive polymer is used in separate form. The composite structural particles can be used in combination with various resins, solvents, and other ingredients in the same way as the conventional rust-preventing pigments; therefore, the most suitable anticorrosive primer compositions for the characteristics required can be obtained without incurring a restriction from the use of an electrically conductive polymer.

The composite structural particles made of an electrically conductive polymer and an inorganic oxide can be produced, for example, by allowing the fine particles of an inorganic oxide to adsorb the monomers of an electrically conductive polymer and then carrying out the chemically oxidative polymerization of the monomers on the fine particles; or by coating the fine particles of an inorganic oxide with a solution of an electrically conductive polymer.

More particularly, the process for producing the composite structural particles involves mixing and dispersing the monomers and the inorganic oxide fine particles in an aqueous medium to cause adsorption; carrying out the chemically oxidative polymerization of the monomers; and separating and purifying the resulting composite structural particles made of the electrically conductive polymer and the inorganic oxide. The production, whether in a continuous process or on separate lines, is not particularly limited, so long as the steps of mixing and dispersing are arranged before the step of carrying out the chemically oxidative polymerization.

The steps of mixing and dispersing the monomers and the inorganic oxide fine particles in an aqueous medium to cause adsorption can be conducted with a conventional industrial mixing and/or dispersing machine. In a reaction vessel with a stirrer, the steps of mixing and dispersing to cause adsorption may be conducted at a time before the polymerization reaction. The temperature for these steps is usually in the range of -20°C to 50°C, preferably 0°C to 10°C.

The chemically oxidative polymerization of the monomers dispersed and adsorbed on the inorganic oxide fine particles may be carried out with an oxidizing agent such as hydrogen peroxide, ammonium persulfate and/or transition metal compounds (*e.g*., ferric sulfate). The molar ratio of oxidizing agent to monomer is usually in the range of 10 : 1 to 1 : 2, preferably 5 : 1 to 1 : 1.

The polymerization temperature is usually in the range of -10°C to 10°C, preferably -10°C to 3°C. If the polymerization temperature exceeds 10°C, the occurrence of an unfavorable side reaction will be observed, which is not preferred.

In ordinary cases, the polymerization is carried out in the presence of a dopant to give a doped polymer. When an organic acidic compound is used as a dopant, for example, a sodium salt of an organic acidic compound such as an anionic surfactant may be employed and neutralized with an inorganic acid in the polymerization system. Also used are salts of a monomer such as aniline and an organic acidic compound. The molar ratio of dopant to monomer is usually in the range of 5 : 1 to 1 : 3.

The electrically conductive polymer is formed by polymerization on the surface of inorganic oxide fine particles dispersed in an aqueous medium, and the resulting composite structural particles are obtained as a dispersion in the aqueous medium.

The dispersion of the composite structural particles is then separated and purified by conventional filtration, ultrafiltration, or microfiltration. After the filtered material was washed with water, the composite structural particles may be obtained in dry state by drying; in wet state with a suitable water content; or as an aqueous dispersion.

The anticorrosive primer composition of the present invention may further contain at least one compound selected from the group consisting of phosphoric acids, sulfonic acids, and derivatives thereof. The phosphoric acids which can be used herein may include orthophosphoric acid, metaphosphoric acid, polyphosphoric acid, and phosphorous acid. The sulfonic acids which can be used herein may include C₃-C₂₀ aliphatic sulfonic acids and aromatic sulfonic acids (*e.g*., camphorsulfonic acid, p-toluenesulfonic acid, dodecylbenzenesulfonic acid). The "derivatives" as used herein refers to lithium, sodium, potassium, aluminum, magnesium, calcium or other metal salts of the above phosphoric acids or sulfonic acids, or alkyl and/or phenyl esters of the above phosphoric acids or sulfonic acids. These phosphoric acids, sulfonic acids, and derivatives thereof may be used solely or in admixture.

The use of phosphoric acids or other compounds makes a contribution to the improvement of adhesion and therefore anticorrosion of a primer coat. In the presence of phosphoric acid, for example, inorganic oxide fine particles or electrically conductive polymers may usually have decreased dispersibility and therefore give an unstable dispersion with deteriorated performance. This problem can be solved by the use of an electrically non-conductive thermoplastic polymer having ionic substituent groups as described below, so that the dispersion properties can be improved to give a finely-divided dispersion, resulting in an improvement of the anticorrosion of a primer coat.

The anticorrosive primer composition of the present invention may further contain an electrically non-conductive thermoplastic polymer. The electrically non-conductive thermoplastic polymer which can be used herein may include vinyl polymers such as polyvinyl chloride (PVC), polystyrene (PS), polyacrylates, and polyvinyl butyral; condensation polymers such as polyesters, polyamides, polyamideimides, and polyimides; addition polymers such as polyurethanes (PU); fluorocarbon polymers such as polyvinylidene fluoride (PVDF), polyfluoroethylene, and polyfluoropropylene; polyethers such as polyphenylene ether (PPE) and polyether ether ketone (PEEK); and copolymers and modified products thereof. These electrically non-conductive thermoplastic polymers may be used solely or in admixture. Preferred electrically non-conductive thermoplastic polymers are polyesters, polyvinyl butyral, and polyacrylates.

Among the above electrically non-conductive thermoplastic polymers, polyesters are particularly preferred. Therefore, the following gives a detailed description of the polyesters.

In the polyesters used in the present invention, copolymerizable acid components may include 20 mol% to 100 mol% aromatic dicarboxylic acids and 0 mol% to 80 mol% aliphatic and/or alicyclic dicarboxylic acids. If the proportion of aromatic dicarboxylic acids is less than 20 mol%, excellent anticorrosion, scratch hardness, and chemical resistance cannot be attained.

The aromatic dicarboxylic acids which can be copolymerized into the polyesters used in the present invention may include terephthalic acid, isophthalic acid, orthophthalic acid, and 2,6-naphthalenedicarboxylic acid, wherein the combined use of isophthalic acid and terephthalic acid is particularly preferred from the viewpoints of the properties of a primer coat and solubility.

The aliphatic dicarboxylic acids which can be copolymerized into the polyesters used in the present invention may include succinic acid, glutaric acid, adipic acid, sebacic acid, dodecanedioic acid, azelaic acid, and dimer acids.

The alicyclic dicarboxylic acids which can be copolymerized into the polyesters used in the present invention may include 1,2-cyclohexanedicarboxylic acid, 1,3-cyclohexanedicarboxylic acid, and 1,4-cyclohexanedicarboxylic acid.

The copolymerizable glycol components in the polyesters used in the present invention are not particularly limited; however, the polyester may preferably contain 10 mol% to 100 mol%, more preferably 30 mol% to 70 mol%, ethylene oxide and/or propylene oxide adducts of bisphenol A and/or bisphenol F and/or bisphenol S, which are represented by the general formulae (1), (2), or (3) as depicted below, from the viewpoints of anticorrosion, processability, chemical resistance, water resistance, and adhesion to metals. 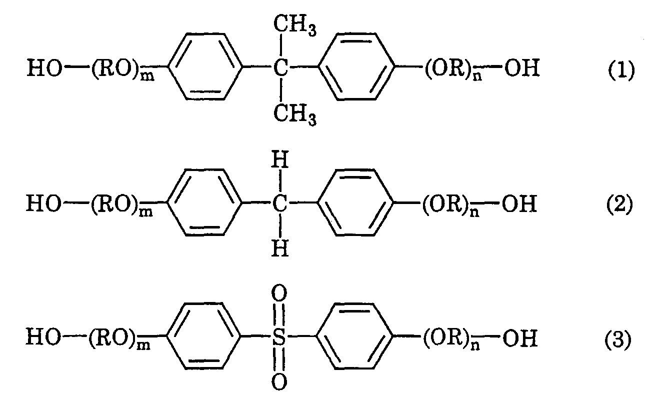 wherein R's are independently C₁-C₄ alkylene, and m's and n's are independently 1 to 5.

Other glycols may also be used, example of which are ethylene glycol, diethylene glycol, neopentyl glycol, propylene glycol, 1,3-propanediol, 2-methyl-1,3-propanediol, 1,4-butanediol, 1,5-pentanediol, 3-methyl-1,5-pentanediol, 1,6-hexanediol, 2,2-diethyl-1,5-pentanediol, 2-butyl-2-ethylpropanediol, 1,4-cyclohexanedimethanol, TCD glycol, polyethylene glycol, and polypropylene glycol. These glycols are suitably selected from the view-points of economic factors and the properties of a primer coat, however, ethylene glycol, diethylene glycol, 2-methyl-1,3-propanediol, and 1,4-cyclohexanedimethanol are particularly preferred.

In addition to the above copolymerizable monomers, multivalent polycarboxylic acids such as trimellitic acid and pyromellitic acid and/or multivalent polyols such as trimethylolethane, trimethylolpropane, glycerin, and pentaerythritol may be used, so long as the excellent effects of the invention are not deteriorated. The use of such a trivalent or higher polycarboxylic acid or polyol in a suitable amount for copolymerization makes it possible to improve the chemical resistance of a primer coat further.

The electrically non-conductive thermoplastic polymer may preferably have ionic substituent groups. The incorporation of ionic substituent groups can be attained by the use of copolymerizable monomers having ionic substituent groups in suitable amounts for copolymerization. For example, in the case of polyesters, dicarboxylic acids or glycols having sulfonic acid or phosphoric acid metal salt groups are preferably used in amounts of 10 mol% or less, more preferably 5 mol% or less. In the presence of ionic substituent groups, the dispersion properties of inorganic oxide fine particles, electrically conductive polymers, or composite structural particles made of an electrically conductive polymer and an inorganic oxide can be improved, so that the primer coat will have reduced pinholes and become compact, resulting in an improvement of anticorrosion performance.

The dicarboxylic acids having sulfonic acid metal salt groups may include metal salts of sulfoterephthalic acid, 5-sulfoisophthalic acid, 4-sulfonaphthalene-2,7-dicarboxylic acid, and 5-[4-sulfophenoxy]-isophthalic acid. The dicarboxylic acids having phosphoric acid metal salt groups may include metal salts of methyl 2,3-dicarboxylpropyl phosphate. The glycols having sulfonic acid metal salt groups may include metal salts of 2-sulfo-1,4-butanediol and 2,5-dimethyl-3-sulfo-2,5-hexanediol. The metal salts may include those of lithium (Li), sodium (Na), potassium (K), magnesium (Mg), calcium (Ca), copper (Cu), and iron (Fe).

The polyesters used in the present invention may be modified with acrylic, epoxy, or urethane moieties.

The acrylic-modified polyesters can be obtained by any of the known methods, in which dicarboxylic acids having unsaturated double bonds, such as fumaric acid or oleic acid, are copolymerized into the polyesters and the unsaturated double bonds introduced in the polyesters are reacted with vinyl compounds such as (meth)acrylates, styrene, or vinyl acetate by radical polymerization in solution; or in which macromonomers having two hydroxyl groups at one end, which are prepared from (meth)acrylates or styrene, are directly copolymerized into the polyesters.

The epoxy-modified polyesters can be obtained by any of the known methods, in which acid anhydrides such as trimellitic anhydride or phthalic anhydride are added to the end hydroxyl groups of the polyesters for the introduction of end carboxyl groups and these introduced carboxyl groups are reacted with epoxy resins in the presence of a catalyst such as triphenylphosphine for epoxy modification. The carboxyl groups may also be introduced by the use of dimethylolpropionic acid or other carboxyl group containing glycols as a chain extender.

The urethane-modified polyesters can be obtained by any of the known methods, in which low molecular weight polyester diols are reacted with diisocyanate compounds, if necessary, in the presence of a chain extender. If required, carboxyl groups may be introduced into the side chains by the use of dimethylolpropionic acid or other carboxyl group containing glycols as a chain extender.

The polyesters used in the present invention may preferably have a glass transition temperature of 0°C to 80°C. In contrast, the polyesters with a glass transition temperature of lower than 0°C, although they have good processability, are not preferred because the primer coat has reduced scratch hardness, chemical resistance, and boiling water resistance. In addition, the polyesters used in the present invention may preferably have a reduced viscosity of 0.3 to 0.7 dl/g and a number average molecular weight of 5,000 to 25,000.

The anticorrosion primer composition of the present invention may preferably have hardening reactivity. The hardening reactivity is given, for example, by the introduction of cross-linkable substituent groups into the electrically conductive polymer and/or into the electrically non-conductive thermoplastic polymer, or by the addition of a hardening agent. Preferred is by the addition of a hardening agent. The cross-linkable substituent groups may include various combinations of functional groups well known in the art (*e.g*., carboxylic acid groups and glycidyl groups, carboxylic acid groups and amino groups, hydroxyl groups and isocyanate groups, amino groups and isocyanate groups) and unsaturated double bond containing groups. The carboxylic acid groups may be in anhydride form, and the isocyanate groups may be in blocked form.

The hardening agent used in the present invention may include compounds capable of causing the thermosetting reaction of a precursor to increase its molecular weight and make its network structure. Examples of the hardening agent are epoxy resins, phenol resins, melamine resins, urea resins, isocyanates, and polyfunctional acrylic monomers. Also included are copolymers, mixtures, and modified products of these compounds. Preferred hardening agents are melamine resins and/or blocked isocyanates.

The weight ratio of electrically non-conductive thermoplastic polymer to hardening agent is in the range of 100 : 0 to 0 : 100. The use of a hardening agent as a cross-linking agent for the electrically non-conductive thermoplastic polymer can give a primer coat with improved adhesion, boiling water resistance, heat resistance, and chemical resistance, in which case the above weight ratio is in the range of 95 : 5 to 70 : 30, preferably 90 : 10 to 80 : 20. Higher weight ratios will give no effects to be expected by cross-linking, whereas lower weight ratios will deteriorate the processability of coated metal articles.

Even when a hardening agent is mainly used, the addition of an electrically non-conductive thermoplastic polymer can improve the processability of coated metal articles. The use of an electrically non-conductive thermoplastic polymer in a higher weight ratio gives a primer coat with reduced heat resistance, boiling water resistance, and adhesion. Therefore, the weight ratio of electrically non-conductive thermoplastic polymer to hardening agent is preferably in the range of 80 : 20 to 95 : 5.

The weight ratio of electrically conductive polymer to electrically non-conductive thermoplastic polymer and hardening agent is preferably in the range of 50 : 50 to 1 : 99, more preferably 30 : 70 to 1 : 99. Weight ratios lower than 1 : 99 will give no satisfactory anticorrosion to be expected, whereas weight ratios higher than 50 : 50 will deteriorate the adhesion and boiling water resistance of a primer coat and the processability of coated metal articles.

The weight ratio of inorganic oxide to electrically non-conductive thermoplastic polymer, hardening agent, and electrically conductive polymer is preferably in the range of 60 : 40 to 10 : 90, more preferably 50 : 50 to 30 : 70. Weight ratios higher than 60 : 40 will give a brittle primer coat, whereas weight ratios lower than 10 : 90 will give no effects to be expected by the addition of an inorganic oxide, such as anticorrosion, water resistance, or adhesion to metals.

The weight ratio of phosphoric acid, sulfonic acid, and/or derivatives thereof to electrically non-conductive thermoplastic polymer, hardening agent, and electrically conductive polymer is preferably in the range of 30 :70 to 1 : 99. Weight ratios higher than 30 : 70 will deteriorate the water resistance of a primer coat, particularly to boiling water, whereas weight ratios lower than 1 : 99 will deteriorate the anticorrosion of a primer coat.

The anticorrosive primer composition of the present invention can be prepared by dissolving or dispersing the above ingredients in an appropriate solvent. When an electrically conductive polymer and an inorganic oxide are used in separate form, it is necessary to use an organic solvent because the use of a dopant or a surfactant in quantity needed for giving high hydrophilicity to the electrically conductive polymer will deteriorate the water resistance, particularly boiling water resistance, of a primer coat. On the other hand, when an electrically conductive polymer and an inorganic oxide are used in the form of composite structural particles, any of the aqueous, organic solvent, and mixed solvent systems can be used because stable dispersion can be achieved without any dopant or surfactant in quantity.

The dissolution or dispersion of the ingredients can be carried out with a conventional industrial dissolving, dispersing, or kneading machine. To facilitate the dissolution or dispersion, various additives may be added, including, but not limited to, dispersing agents, anti-foaming agents, surfactants, coupling agents, leveling agents, weathering agents, coloring agents, and pigments.

The anticorrosive primer composition of the present invention may be applied to surface-treated or non-treated metals to form a primer coat by any of the conventional methods. The primer coat may be provided with an intercoat optionally formed thereon and a topcoat finally formed thereon.

The resins used in the paints for the intercoat and/or topcoat applied on the primer coat may include epoxy resins, phenol resins, melamine resins, alkyd resins, acrylic resins, polyester resins, polyurethane resins, polyvinyl chloride resins, and polypropylene resins.

The anticorrosive primer composition of the present invention is used for primer coat application to the surface of various metals including, but not limited to, iron, aluminum, copper titanium, and nickel. These metals may be subjected to various surface treatments before application. The surface treatments may include plating of various metals or alloys, surface oxidation, chemical finishing with an acid and/or an aqueous metal salt solution, chromate treatment, and application with a coating solution prepared by the addition of a rust-preventing agent or anticorrosive agent to an organic matrix resin. All of the surface treatments attain the formation of a very thin film on the surface of metals.

The metals to be treated with an anticorrosive primer composition of the present invention may be in any shape of various articles including, but not limited to, plates, sheets, wires, cables, tubes, pipes, rods, shape steels (*e.g*., H beams), as well as parts and products formed therefrom.

The coated metal articles obtained by the application of an anticorrosive primer composition of the present invention can find many applications, particularly highly required to have anticorrosion, including, but not limited to, electrical appliances, building materials, automobiles, bicycles, electric trains, ships, airplanes, machine tools, bridges, machinery and materials for civil engineering.

The anticorrosive primer composition of the present invention meets the requirements for various characteristics for ordinary primers, as well as for the anticorrosion properties. With the synergistic and complementary actions of blended ingredients, the composition can express the anticorrosion performance of an electrically conductive polymer and, at the same time, exhibit adhesion, water resistance, particularly to boiling water, processability, and other characteristics.

### Examples

The present invention will be further illustrated by the following examples; however, the present invention is not limited to these examples.

Various characteristics are evaluated by the following methods.

### 1. Processability

Coated steel plates were bent with uncoated steel plates in the same thickness being interposed therebetween, and the minimum number (T) of uncoated steel plates was determined, at which the coats of each coated steel plate were not cracked.

### 2. Coin scratch hardness

Coated steel plates were scratched with a ten-yen coin bearing a 2 kg load in the same manner as defined in the pencil hardness test of JIS-K-5400, and then evaluated for scratches in the coats by visual observation.

ⓞ: excellent (scratches hold in the topcoat); ○: good (scratches hold in the primer coat); △: rather poor; X: poor (scratches reach the steel plate).

### 3. Gloss

The 60° reflectance was measured by the same procedure as defined in JIS-K-5400.

### 4. Adhesion in processing

Coated steel plates were bent with two (2T) uncoated steel plates in the same thickness being interposed therebetween, followed by tape peeling in the bent portion of each coated steel plate, and then evaluated for the degree of peeling by visual observation.

ⓞ: excellent (no peeling); ○: good; △: rather poor; X: poor (complete peeling).

### 5. Boiling water resistance (according to the same procedure as defined in JIS-K-5400)

1) For the immersion test in boiling water for 2 hours, immersion for a prescribed time was followed by the measurements as described below.
   i) Gloss: Determined in the same manner as described in item 3 above.
   ii) Erichsen test (6 mm): Coated steel plates were provided with grids (1 mm in the size of gaps and 100 in the number of squares), followed by the Erichsen test at 6 mm in the grid portion of each coated steel plate and then tape peeling.
      100/100: excellent; 0/100 poor (complete peeling).
   iii) Retention of gloss: Determined by the percentage change in gloss after and before the immersion in boiling water.
   iv) Appearances: Evaluated by visual observation according to the procedure as defined in ASTM-D714.
      10: no change in appearance; 8F: a few blisters of about 1 mm in diameter were observed; 9D: blisters smaller in size but considerably larger in number density than in the case of 8F were observed.
   v) 2T Tape peeling: Performed in the same manner as described in item 4 above.
   vi) 0T Tape peeling: Coated steel plates were bent without using uncoated steel plates to be interposed therebetween, followed by tape peeling in the bent portion of each coated steel plate, and then evaluated for the degree of peeling by visual observation under the same criteria as described in item 4 above.
   vii) Coin scratch hardness: Determined in the same manner as described in item 2 above.
2) For the immersion test in boiling water without a fixed time, the time during which the coats of each coated steel plate remain unchanged in appearance was determined.

### 6. Anticorrosion (according to the same procedure as defined in JIS-K-5400)

Coated steel plates were cut upward or downward at their edges to form edge faces, and then each provided with a crosscut of 5 cm in length at the center thereof using a cutter. These coated steel plates were bent in the 2T mode in their lower portions to form bent portions, followed by exposure to salt water spray at 35°C.
1) For the exposure test to salt water spray for a prescribed time, salt water spraying was followed by the measurements as described below.
   i) Flat portions: Appearance was evaluated by visual observation.
   ii) Crosscuts: The maximum breadth (mm) of corrosion (blister) from the crosscut portion was determined.
   iii) Edge faces: The maximum breadth (mm) of corrosion (blister) from the edge face was determined.
   iv) 2T Processed portions: Tape peeling in the bent portion was carried out. The method for evaluation was the same as described in item 4 above.
   v) Crosscut corrosion: The maximum breadth (mm) of rust from the crosscut portion (observable by appearances) was determined.
   vi) Crosscut peeling: The maximum breadth (mm) of peeling at the time of tape peeling in the crosscut portion was determined.
2) For the exposure test to salt water spray without a fixed time, the time during which the coats of each coated steel plate remain unchanged in appearance was determined.

### 7. Humidity resistance

Coated steel plates were cut downward at their edges to form edge faces, and then each provided with a crosscut of 5 cm in length in the center thereof using a cutter. These coated steel plates were bent in the 2T mode in their lower portions to form bent portions, followed by humidity exposure under the conditions of 50°C and 98% RH for 350 hours. After the exposure, the crosscut portions, flat portions, 2T bent portions, and edge faces of the coated steel plates were evaluated by the same method as described in item 6 above.

### 8. Dispersibility

At the step of shaking in the preparation of an anticorrosive primer composition, dispersibility was determined by the evaluation of dispersion time and dispersion state from the particle diameter.

ⓞ: excellent; ○: good; △: rather poor; X: poor.

The following are preparation examples for an electrically conductive polymer (doped polyaniline), composite structural particles of an electrically conductive polymer and an inorganic oxide (polyaniline-inorganic oxide composite materials), and electrically non-conductive thermoplastic polymers (copolyesters).

### Preparation Example 1

A three-necked flask (300 ml) with a stirrer, a distillate outlet tube, and a thermometer was charged with 27.8 g of dimethyl 5-sulfoisophthalate sodium salt, 207.8 g of diethylene glycol mono-n-butyl ether, and 0.067 g of zinc acetate as an esterification catalyst, and the reaction was carried out at 210 °C for 8 hours. With the progress of the reaction, the reaction mixture turned from a white suspension into a clear homogenous liquid, while methanol was distilled out in a calculated amount. Further distillation at 220°C, 70 mmHg gave unreacted diethylene glycol mono-n-butyl ether within 2 hours.

### Preparation Example 2

First, 8.34 g of the diester compound obtained in Preparation Example 1 was dissolved in 80 g of deionized water, and 2.022 g of sulfuric acid and 1.863 g of aniline were added thereto, followed by cooling to 0°C. A solution of 4.564 g of ammonium peroxodisulfate dissolved in 20 g of deionized water, which had been cooled to 0°C, was added dropwise over 20 minutes. The reaction mixture was kept at 0°C with stirring for 20 hours. The resulting doped polyaniline, which had been precipitated, was collected by filtration through a G4 glass filter, washed with water, and then dried.

### Preparation Example 3

To 10.00 g of SYLYSIA 350 (silica product available from Fuji Silysia Chemical Ltd.) were added 90.0 g of deionized water, 2.022 g of concentrated sulfuric acid and 1.863 g of aniline, and while keeping at 0°C, 4.564 g of ammonium persulfate was added thereto, followed by stirring for 3 hours. Thus, a greenish black polyaniline-silica composite material was obtained in the form of an aqueous dispersion. Filtration through a G4 glass filter, washing with water, and drying gave 11.85 g of polyaniline-silica composite material. A portion of the composite material was pulverized in a mortar and compressed into a disk of 13 mm in diameter to measure the electrical conductance. The electrical conductance was 0.014 S/cm.

### Preparation Example 4

A polyaniline-silica composite material was prepared in the same manner as described in Preparation Example 3, except that an aqueous dispersion of SYLYSIA 350 was replaced by an aqueous dispersion containing 10.00 g of SNOWTEX (silica product available from Nissan Chemical Industries, Ltd.) as the solid content. The resulting aqueous dispersion of the polyaniline-silica composite material was purified by ultrafiltration to give 104 g of an aqueous dispersion (solid content, 4.9%). A portion of the aqueous dispersion was taken and then dried to give a dry polyaniline-silica composite material. The electrical conductance was 0.092 S/cm.

### Preparation Example 5

A polyaniline-titanium oxide composite material was prepared in the same manner as described in Preparation Example 3, except that an aqueous dispersion of SYLYSIA 350 was replaced by an aqueous dispersion containing 10.00 g of titanium oxide CR-93 (available from Ishihara Sangyo Kaisha, Ltd.). The resulting aqueous dispersion of the polyaniline-titanium oxide composite material was purified by filtration under suction and then dried to give 11.27 g of a dry polyaniline-titanium oxide composite material. The electrical conductance was 0.041 S/cm.

### Preparation Example 6

A reaction vessel with a stirrer, a condenser, and a thermometer was charged with 186 parts of dimethyl terephthalate, 174 parts of dimethyl isophthalate, 17 parts of 5-sulfoisophthalic acid sodium salt, 166 parts of ethylene glycol, 491 parts of DA-350 (ethylene oxide adduct of bisphenol A, available from NOF CORPORATION), and 0.14 part of tetrabutyl titanate, followed by ester interchange at 160°C to 240°C over 4 hours. The pressure in the reaction vessel was then gradually reduced to 5 mmHg over 59 minutes and further reduced to a vacuum of not lower than 0.3 mmHg, at which polycondensation was carried out at 260°C for 60 minutes. The composition analysis of the resulting copolyester by NMR or other means revealed that the molar ratio of acid components was terephthalic acid/-isophthalic acid/5-sulfoisophthalic acid sodium salt = 50/47/3 and the molar ratio of glycol components was ethylene glycol/DA-350 (ethylene oxide adduct of bisphenol A) = 20/80. The reduced viscosity was 0.45 dl/g and the glass transition temperature was 60°C.

### Preparation Example 7

A reaction vessel with a stirrer, a condenser, and a thermometer was charged with 186 parts of dimethyl terephthalate, 175 parts of dimethyl isophthalate, 17 parts of 5-sulfoisophthalic acid sodium salt, 285 parts of diethylene glycol, 491 parts of DA-350 (ethylene oxide adduct of bisphenol A, available from NOF CORPORATION), and 0.14 part of tetrabutyl titanate, followed by ester interchange at 160°C to 240°C over 4 hours. The pressure in the reaction vessel was then gradually reduced to 5 mmHg over 59 minutes and further reduced to a vacuum of not lower than 0.3 mmHg, at which polycondensation was carried out at 260°C for 60 minutes. The composition analysis of the resulting copolyester by NMR or other means revealed that the molar ratio of acid components was terephthalic acid/-isophthalic acid/5-sulfoisophthalic acid sodium salt = 50/47/3 and the molar ratio of glycol components was diethylene glycol/DA-350 (ethylene oxide adduct of bisphenol A) = 50/50. The reduced viscosity was 0.55 dl/g and the glass transition temperature was 50°C.

### Preparation Example 8

A reaction vessel with a stirrer, a condenser, and a thermometer was charged with 186 parts of dimethyl terephthalate, 186 parts of dimethyl isophthalate, 285 parts of diethylene glycol, 491 parts of DA-350 (ethylene oxide adduct of bisphenol A, available from NOF CORPORATION), and 0.14 part of tetrabutyl titanate, followed by ester interchange at 160°C to 240°C over 4 hours, The pressure in the reaction vessel was then gradually reduced to 5 mmHg over 59 minutes and further reduced to a vacuum of not lower than 0.3 mmHg, at which polycondensation was carried out at 260°C for 60 minutes. The composition analysis of the resulting copolyester by NMR or other means revealed that the molar ratio of acid components was terephthalic acid/isophthalic acid = 50/50 and the molar ratio of glycol components was diethylene glycol/-bisphenol A = 50/50. The reduced viscosity was 0.45 dl/g and the glass transition temperature was 50°C.

The following examples and comparative examples demonstrate that the anticorrosive primer compositions of the present invention have various functions required for conventional primers, such as adhesion, water resistance, flexibility and chemical resistance, while exhibiting excellent anticorrosion performance.

### Example 1

A chromate-treated zinc-plated steel plate (GI material Z06, 0.5 mm x 70 mm x 150 mm) was covered with coats by the following procedures and then subjected to various tests as described above.
1) The steel plate was heat-treated at 230°C for 15 seconds to remove the water content.
2) The anticorrosive primer composition described below was applied as a primer coat to the steel plate, which was then heat-treated at 150°C for 30 seconds. The primer coat had a thickness of 3 µm.
3) Onto the primer coat was applied a polyester resin as a top coat, and the coated steel plate was then heat-treated at 230°C for 1 minute. The top coat had a thickness of 15 µm.
4) The coated steel plate was tested for anticorrosion, boiling water resistance, processability, and coin scratch hardness.

The anticorrosive primer composition was as follows:

| | |
|---|---|
| Doped polyaniline obtained in Preparation Example 2 | 2.5 parts |
| Vylon resin RV-290 (copolyester available from Toyo Boseki K.K.) | 8.3 parts |
| Sumimal M40S (melamine resin available from Sumitomo Chemical Company, Limited) | 1.7 parts |
| Orthophosphoric acid (85%) | 0.4 part |
| Titanium oxide | 12.5 parts |
| Cyclohexanone | 74.6 parts |

### Comparative Example 1

The same steel plate was covered with coats by the same procedures as used in Example 1 and then tested for anticorrosion, boiling water resistance, processability, and coin scratch hardness. The primer coat had a thickness of 8 µm, and the anticorrosive primer composition was as follows:

| | |
|---|---|
| Vylon resin RV-290 (copolyester available from Toyo Boseki K.K.) | 8.5 parts |
| Sumimal M40S (melamine resin available from Sumitomo Chemical Company, Limited) | 1.7 parts |
| Orthophosphoric acid (85%) | 0.4 part |
| Titanium oxide | 12.8 parts |
| Cyclohexanone | 76.5 parts |

### Comparative Example 2

The same steel plate was covered with coats by the same procedures as used in Example 1 and then tested for anticorrosion, boiling water resistance, processability, and coin scratch hardness. The hardening conditions for the primer coat were 210°C and 50 seconds. The primer coat had a thickness of 8 µm, and the anticorrosive primer composition was as follows:

| | |
|---|---|
| Vylon resin RV-290 (copolyester available from Toyo Boseki K.K.) | 13.6 parts |
| Sumimal M40S (melamine resin available from Sumitomo Chemical Company, Limited) | 2.7 parts |
| Strontium chromate rust-preventing pigment | 6.8 parts |
| Titanium oxide | 6.8 parts |
| Cyclohexanone | 70.0 parts |

The results obtained in Example 1, Comparative Examples 1 and 2 are shown in Table 1.

**TABLE 1**

| Test items | Example 1 | Comparative Example 1 | Comparative Example 2 |
|---|---|---|---|
| Processability | 1T | 1T | 1T |
| Coin scratch hardness | ○ | △∼X | △∼X |
| Gloss | 99 | 95 | 93 |

| Boiling water resistance (2 hours) | | | |
|---|---|---|---|
| Retention of gloss | 100% | 88% | 86% |
| Appearance | 10 | 9D | 8F |
| Erichsen (6 mm) | 100/100 | 90/100 | 91/100 |
| 2T Tape peeling | ⓞ∼○ | X | |

| Anticorrosion (250 hours) | | | |
|---|---|---|---|
| Crosscuts (mm) | 0 | 2.0 | 0 |
| Edge faces (cut upward) (mm) | 5.3 | 7.5 | 5.5 |
| 2T Processed portions | ⓞ | △ | ⓞ |

As can be seen from Table 1, the coated steel plate of Example 1 was superior in boiling water resistance, anticorrosion and coil scratch hardness, but equal in processability and gloss to the coated steel plate of Comparative Example 1. Furthermore, the coated steel plate of Example 1 was superior in boiling water resistance and coin scratch hardness, but equal in anticorrosion, processability and gloss to the coated steel plate of Comparative Example 2.

### Example 2

A non-chromate-treated zinc-plated steel plate (GI material Z06, 0.5 mm x 70 mm x 150 mm) was covered with coats by the same procedures as used in Example 1 and then tested for anticorrosion, boiling water resistance, processability, and coin scratch hardness. The anticorrosive primer composition was as follows:

| | |
|---|---|
| Doped polyaniline obtained in Preparation Example 2 | 2.5 parts |
| Vylon resin RV-290 (copolyester available from Toyo Boseki K.K.) | 8.3 parts |
| Sumimal M40S (melamine resin available from Sumitomo Chemical Company, Limited) | 1.7 parts |
| Orthophosphoric acid (85%) | 0.9 part |
| Titanium oxide | 12.5 parts |
| Cyclohexanone | 74.1 parts |

### Comparative Example 3

The same steel plate was covered with coats by the same procedures as used in Example 2 and then tested for anticorrosion, boiling water resistance, processabiity, and coin scratch hardness. The primer coat was the same as in Comparative Example 2. The results obtained in Example 2 and Comparative Example 3 are shown in Table 2.

**TABLE 2**

| Test items | Example 2 | Comparative Example 3 |
|---|---|---|
| Processability | 2T | 2T |
| Coin scratch hardness | ○∼△ | △∼X |
| Gloss | 99 | 99 |

| Boiling water resistance (2 hours) | | |
|---|---|---|
| Retention of gloss | 100% | 91% |
| Appearance | 10 | SF |
| Erichsen (6 mm) | 100/100 | 90/100 |
| 2T Tape peeling | ⓞ | X |

| Anticorrosion (250 hours) | | |
|---|---|---|
| Crosscuts (mm) | 2.0 | 3.8 |
| Edge faces (cut upward) (mm) | 6.5 | 6.3 |
| 2T Processed portions | ○ | ○ |

As can be seen from Table 2, the coated steel plate of Example 2 was superior in coin scratch hardness and boiling water resistance, but equal in processability, gloss and anticorrosion to the coated steel plate of Comparative Example 3.

### Example 3

An SA (zinc/iron alloy-plated) material (0.5 mm x 70 mm x 150 mm) was covered with coats by the same procedures as used in Example 1 and then tested for boiling water resistance, anticorrosion, and humidity resistance. The primer coat had a thickness of 5 µm, and the anticorrosive primer composition was as follows:

| | |
|---|---|
| Doped polyaniline obtained in Preparation Example 2 | 3.0 parts |
| Vylon resin RV-290 (copolyester available from Toyo Boseki K.K.) | 6.3 parts |
| Sumimal M40S (melamine resin available from Sumitomo Chemical Company, Limited) | 0.6 part |
| Orthophosphoric acid (85%) | 1.4 parts |
| Aluminum tripolyphosphate | 1.0 part |
| Titanium oxide | 5.0 parts |
| Cyclohexanone | 87.7 parts |

### Comparative Example 4

The same steel plate as used in Example 3 was covered with coats by the same procedures as used in Comparative Example 2, and then subjected to the same tests as employed in Example 3. The primer coat was the same as in Comparative Example 2. The results of Example 3 and Comparative Example 4 are shown in Table 3.

**TABLE 3**

| Test items | Example 3 | Comparative Example 4 |
|---|---|---|
| Boiling water resistance (2 hours) | | |
| Gloss | 86 | 79 |
| Erichsen (6 mm) | 100/100 | 100/100 |
| 0T Tape peeling | ⓞ | ⓞ |
| Coin scratch hardness | ○ | △ |

| Anticorrosion (350 hours) | | |
|---|---|---|
| Crosscuts (mm) | 0 | < 0.5 |
| Plat portions | OK | OK |
| 2T Processed portions | ⓞ | ⓞ |
| Edge faces (cut downward) (mm) | < 0.5 | < 2.5 |

| Humidity resistance (350 hours) | | |
|---|---|---|
| Crosscuts (mm) | < 0.5 | < 0.5 |
| Plat portions | OK | OK |
| 2T Processed portions | ○ | ○ |
| Edge faces (cut downward) (mm) | < 0.5 | < 0.5 |

As can be seen from Table 3, the coated steel plate of Example 3 was superior in boiling water resistance and anticorrosion, but equal in humidity resistance to the coated steel plate of Comparative Example 4.

### Example 4

A bonderized (zinc phosphate-treated) cold-rolled steel plate (0.8 mm x 70 mm x 150 mm) was covered with coats by the same procedures as used in Example 1 and then tested for adhesion in processing, coin scratch hardness, boiling water resistance, and anticorrosion. The primer coat had a thickness of 5 µm, and the anticorrosive primer composition was as follows:

| | |
|---|---|
| Doped polyaniline obtained in Preparation Example 2 | 2.7 parts |
| Vylon resin RV-290 (copolyester available from Toyo Boseki K.K.) | 5.8 parts |
| Sumimal M40S (melamine resin available from Sumitomo Chemical Company, Limited) | 0.6 part |
| Orthophosphoric acid (85%) | 1.3 parts |
| Titanium oxide | 9.1 parts |
| Cyclohexanone | 80.5 parts |

### Comparative Example 5

The same steel plate as used in Example 4 was covered with coats by the same procedures as used in Comparative Example 2, and then subjected to the same tests as employed in Example 4. The primer coat was the same as in Comparative Example 2. The results of Example 4 and Comparative Example 5 are shown in Table 4.

**TABLE 4**

| Test items | Example 4 | Comparative Example 5 |
|---|---|---|
| Adhesion in processing | ○ | ○∼△ |
| Coin scratch hardness | ○ | △ |
| Boiling water resistance (no change in appearance) | 20 hours | 4 hours |
| Anticorrosion (no change in appearance) | 500 hours | 300 hours |

As can be seen from Table 4, when the bonderized cold-rolled steel plates were used, the coated steel plate of Example 4 was superior in all the test items to the coated steel plate of Comparative Example 5.

### Example 5

A cold-rolled steel plate (0.5 mm x 70 mm x 150 mm) was covered with coats by the following procedures and then tested for anticorrosion.
1) The steel plate was subjected to alkali cleaning and then acid cleaning to remove a rust-preventing oil and an adhering scale.
2) The anticorrosive primer composition described below was applied as a primer coat to the steel plate, which was then heat-treated at 130°C for 30 minutes. The primer coat had a thickness of 5 µm.
3) Onto the primer coat was applied an alkyd resin as a top coat, and the coated steel plate was then heat-treated at 130°C for 30 minutes. The top coat had a thickness of 30 µm.
4) The resulting coated steel plate was tested for anticorrosion.

The anticorrosive primer composition was as follows:

| | |
|---|---|
| Polyaniline-silica composite material obtained in Preparation Example 4 | 3.0 parts |
| Epoxy resin PZ3901 (available from Asahi-Ciba, Co., Ltd.) | 3.5 parts |
| Phenol resin CKE-237 (available from Showa Highpolymer Co., Ltd.) | 3.5 parts |
| Orthophosphoric acid (85%) | 1.4 parts |
| Deionized water | 108.6 parts |

### Example 6

The same steel plate as used in Example 5 was covered with coats by the same procedures as used in Example 5 and then tested for anticorrosion. The anticorrosive primer composition was as follows:

| | |
|---|---|
| Polyaniline-silica composite material obtained in Preparation Example 3 | 5.1 parts |
| Butyral resin | 4.9 parts |
| Orthophosphoric acid (85%) | 10.0 parts |
| Deionized water | 16.8 parts |
| 2-Butanol | 63.2 parts |

### Comparative Example 6

The same steel plate as used in Example 5 was covered with coats by the same procedures as used in Example 5 and then tested for anticorrosion. The anticorrosive primer composition was as follows:

| | |
|---|---|
| SNOWTEX-O (colloidal silica available from Nissan Chemical Industries, Ltd.) | 3.0 parts |
| Epoxy resin PZ3901 (available from Asahi-Ciba Co., Ltd.) | 3.5 parts |
| Phenol resin CKE-2370 (available from Showa Highpolymer Co., Ltd.) | 3.5 parts |
| Orthophosphoric acid (85%) | 1.4 parts |
| Deionized water | 108.6 parts |

The results of Examples 5, 6 and Comparative Example 6 are shown in Table 5.

**TABLE 5**

| Test item | Example 5 | Example 6 | Comparative Example 6 |
|---|---|---|---|
| Anticorrosion (144 hours) | | | |
| Crosscuts (mm) | 3.0 | 1.0 | 6.0 |
| Crosscut corrosion (mm) | 1.0 | 1.0 | 2.0 |
| Crosscut peeling (mm) | 3.0 | 1.0 | 6.0 |

As can be seen from Table 5, the coated steel plates obtained by the use of a polyaniline-containing primer composition according to Examples 5 and 6 made slower progress in the corrosion of crosscuts than that of the coated steel plate obtained by the use of a primer composition containing no polyaniline according to Comparative Example 6.

### Examples 7-12 and Comparative Example 7

Zinc-plated steel plates (GI material Z06, 0.5 mm x 70 mm x 150 mm) were covered with coats by the following procedures and then subjected to various tests as described above.
1) The steel plates were heat-treated at 230°C for 15 seconds to remove the water content.
2) The anticorrosive primer composition described below was applied as a primer coat to the steel plates, which were then heat-treated at 230°C for 60 seconds. Each primer coat had a thickness of 3 µm.
3) Onto each primer coat was applied a polyester resin thermosetting white paint as a top coat, and the coated steel plates were then heat-treated at 230°C for 60 seconds. Each top coat had a thickness of 15 µm.
4) The coated steel plates were tested for anticorrosion, boiling water resistance, processability, and coin scratch hardness.

The anticorrosive primer composition was prepared by mixing the following ingredients and used after dispersing by shaking with glass beads.

### Example 7

| | |
|---|---|
| Doped polyaniline obtained in Preparation Example 2 | 2.5 parts |
| Copolyester obtained in Preparation Example 6 | 8.3 parts |
| Sumimal M40S (melamine resin available from Sumitomo Chemical Company, Limited) | 1.7 parts |
| Orthophosphoric acid (85%) | 0.4 part |
| Titanium oxide | 12.5 parts |
| Cyclohexanone | 74.6 parts |

### Example 8

| | |
|---|---|
| Polyaniline-silica composite material obtained in Preparation Example 3 | 4.0 parts |
| Copolyester obtained in Preparation Example 6 | 6.3 parts |
| Sumimal M40S (melamine resin available from Sumitomo Chemical Company, Limited) | 0.6 part |
| Orthophosphoric acid (85%) | 1.4 parts |
| Titanium oxide | 5.0 parts |
| Cyclohexanone | 87.7 parts |

### Example 9

| | |
|---|---|
| Polyaniline-silica composite material obtained in Preparation Example 4 | 7.6 parts |
| Copolyester obtained in Preparation Example 7 | 14.8 parts |
| Sumimal M40S (melamine resin available from Sumitomo Chemical Company, Limited) | 3.0 parts |
| Orthophosphoric acid (85%) | 1.8 parts |
| Titanium oxide | 12.7 parts |
| Cyclohexanone | 60.0 parts |

### Example 10

| | |
|---|---|
| Doped polyaniline obtained in Preparation Example 2 | 7.0 parts |
| Copolyester obtained in Preparation Example 6 | 13.5 parts |
| Sumimal M40S (melamine resin available from Sumitomo Chemical Company, Limited) | 2.5 parts |
| Metaphosphoric acid | 2.0 parts |
| Titanium oxide | 14.0 parts |
| Cyclohexanone | 71.0 parts |

### Example 11

| | |
|---|---|
| Polyaniline-silica composite material obtained in Preparation Example 3 | 5.7 parts |
| Copolyester obtained in Preparation Example 7 | 12.0 parts |
| Sumimal M40S (melamine resin available from Sumitomo Chemical Company, Limited) | 3.0 parts |
| Phosphoric acid | 2.4 parts |
| Silica | 17.0 parts |
| Cyclohexanone | 59.9 parts |

### Example 12

The same steel plate was covered with coats by the same procedures as used in Example 7 and then tested for anticorrosion, boiling water resistance, processability and coin scratch hardness. The anticorrosive primer composition was as follows:

| | |
|---|---|
| Polyaniline-silica composite material obtained in Preparation Example 4 | 7.6 parts |
| Copolyester obtained in Preparation Example 8 | 14.8 parts |
| Sumimal M40S (melamine resin available from Sumitomo Chemical Company, Limited) | 3.0 parts |
| Orthophosphoric acid (85%) | 1.8 parts |
| Titanium oxide | 12.7 parts |
| Cyclohexanone | 60.0 parts |

### Comparative Example 7

The same steel plate was covered with coats by the same procedures as used in Example 7 and then tested for anticorrosion, boiling water resistance, processability, and coin scratch hardness. The hardening conditions for the primer coat were 210°C and 50 seconds. The primer coat had a thickness of 8 µm, and the anticorrosive primer composition was as follows:

| | |
|---|---|
| Copolyester obtained in Preparation Example 7 | 13.6 parts |
| Sumimal M40S (melamine resin available from Sumitomo Chemical Company, Limited) | 2.7 parts |
| Strontium chromate rust-preventing pigment | 6.8 parts |
| Titanium oxide | 6.8 parts |
| Cyclohexanone | 70.0 parts |

The results obtained in Examples 7-12 and Comparative Example 7 are shown in Table 6.

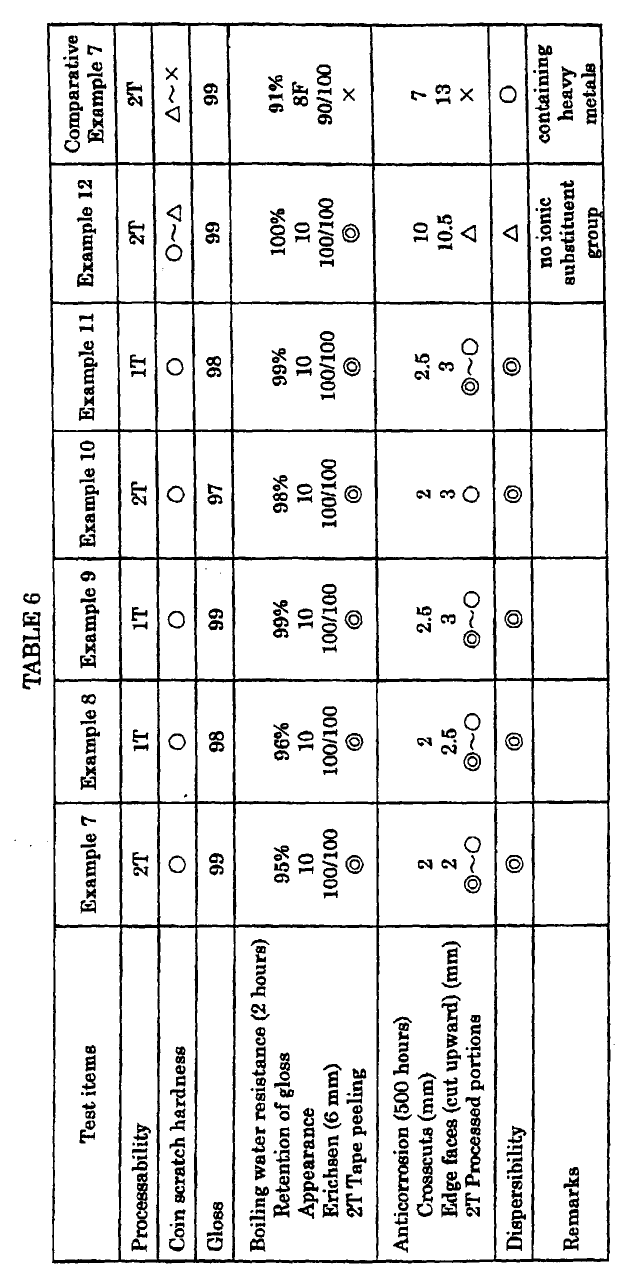

As can be seen from Table 6, the coated steel plates of Examples 7 to 12 were better in coin scratch hardness and boiling water resistance when compared with the coated steel plate of Comparative Example 7. The coated steel plates of Examples 7 to 11, although they exhibited no difference in boiling water resistance, were better in dispersibility coin scratch hardness and anticorrosion when compared with the coated steel plate of Example 12.

## Claims

1. An anticorrosive primer composition comprising an electrically conductive polymer and an inorganic oxide.

2. The anticorrosive primer composition according to claim 1, wherein the electrically conductive polymer and the inorganic oxide are in the form of composite structural particles.

3. The anticorrosive primer composition according to claim 1 or 2, further comprising at least one compound selected from the group consisting of phosphoric acids, sulfonic acids, and derivatives thereof.

4. The anticorrosive primer composition according to any of claims 1 to 3, further comprising an electrically non-conductive thermoplastic polymer.

5. The anticorrosive primer composition according to claim 4, wherein the electrically non-conductive thermoplastic polymer has an ionic substituent group.

6. The anticorrosive primer composition according to any of claims 1 to 5, wherein the electrically conductive polymer has a cross-linkable substituent group.

7. The anticorrosive primer composition according to claim 4, wherein the electrically non-conductive thermoplastic polymer has a cross-linkable substituent group.

8. The anticorrosive primer composition according to any of claims 1 to 7, further comprising a hardening agent.

9. An anticorrosive primer coat formed by application of the anticorrosive primer composition according to any of claims 1 to 8.

10. A coated metal article comprising a metal layer, a primer coat formed on the metal layer by application of the anticorrosive primer composition according to any of claims 1 to 8, and a topcoat.
